# EUROPÄISCHE PATENTSCHRIFT

(11) **EP 0 580 023 B1**
(45) Veröffentlichungstag und Bekanntmachung des Hinweises auf die Patenterteilung: **27.09.1995**
(21) Anmeldenummer: 93110912.8
(22) Anmeldetag: 08.07.1993
(51) Int. Cl.: B60R 9/04

(54) **Dachreling für Fahrzeuge**
Roof rails for vehicles
Rails de toit pour véhicules

(30) Priorität: 21.07.1992 DE 4223898
(43) Veröffentlichungstag der Anmeldung: 26.01.1994
(73) Patentinhaber: Happich Fahrzeug-Dachsysteme GmbH, D-42285 Wuppertal (DE)
(72) Erfinder: Lumpe, Karl-Heinz, D-42279 Wuppertal (DE); Kolodziej, Klaus, D-42327 Wuppertal (DE); Mahler, Gerd, D-42477 Radevormwald (DE)

(56) Entgegenhaltungen:
- DE-A- 2 946 533
- FR-A- 1 472 431
- GB-A- 1 261 188
- US-A- 3 719 313
- US-A- 4 182 471

## Beschreibung

Die Erfindung bezieht sich auf eine Dachreling für Fahrzeuge, bestehend aus zwei, sich in einem Abstand und im wesentlichen parallel zur Dachfläche längs der seitlichen Dachrahmen erstreckenden rohrförmigen Holmen und aus die Holme tragenden, sich jeweils auf dem Dach oder darin ausgebildeten Kanälen abstützenden Füßen, die an den Enden der Holme angeordnet sind.

Eine Dachreling der gattungsgemäßen Art ist z.B. in der DE-C-4 004 829 gezeigt. Wie sich aus dieser Druckschrift ergibt, besteht eine Dachreling üblicherweise aus mindestens einem Holm an jeder Dachseite und mindestens zwei jeweils einen Holm tragenden Relingfüßen. Zur Montage werden die Holme und Füße zusammengesteckt, und die Füße werden mit Gewindebolzen bestückt, deren überstehenden Enden durch Bohrungen im Dachblech hindurchgeführt werden. Auf die Gewindebolzen werden von der anderen Seite des Dachblechs her Schraubenmuttern aufgebracht.

Der Aufwand bei der Herstellung einer herkömmlichen Dachreling ist beachtlich. So müssen die Holme für sich gefertigt und entsprechend der Dachkontur oftmals in zwei Ebenen gebogen werden. Auch die Füße müssen separat hergestellt und hinsichtlich der Oberfläche den Holmen angepaßt werden, was trotz hohem Aufwand nicht immer zu gewährleisten ist. Oftmals sind Glanzunterschiede und nach erfolgter Montage ein Versatz zwischen den Füßen und den Holmen festzustellen. Von besonderem Nachteil bei Dachrelings herkömmlicher Art ist die in der Praxis nicht zu vermeidende Fugen- oder Spaltbildung zwischen den Enden der Holme und den sich an den Holmenden jeweils anschließenden Füßen. Diese Fugen oder Spalte beeinträchtigen die Stilistik einer Dachreling und fördern ein Eindringen von Schmutz und damit die Gefahr einer Korrosionsbildung.

Der Erfindung liegt daher die Aufgabe zugrunde, eine Dachreling der eingangs genannten Art zur Verfügung zu stellen, die sich bei relativ einfacher und kostengünstiger Herstellbarkeit durch ein besonders gutes Aussehen auszeichnen soll.

Diese Aufgabe wird der Erfindung zufolge dadurch gelöst, daß die Füße jeweils einstückig mit den Holmen ausgebildet sind und aus abgebogenen und aufgeweiteten Endbereichen der Holme bestehen.

Die erfindungsgemäße Dachreling weist den besonderen Vorteil auf, daß zwischen den Holmen und Füßen weder Fugen oder Spalte, noch sichtbare Trennlinien bestehen. Vielmehr erscheint die Dachreling nunmehr als aus einem Guß zu bestehen, was ja auch zutreffend ist. Die Dachreling weist nunmehr auch eine einheitliche Oberfläche und keine Glanzunterschiede mehr auf, was insbesondere dann von Vorteil ist, wenn die Dachreling aus Aluminium besteht und mit einer eloxierten Zieroberfläche ausgebildet ist.

In Ausgestaltung der Erfindung kann vorgesehen sein, daß jeder Fuß ein im Fußinnern befestigtes Aufnahmeelement trägt, das zur Aufnahme von Befestigungsmitteln für die Dachreling bestimmt ist. Die Aufnahmeelemente sind im montierten Zustand der Dachreling nicht sichtbar, so daß für die Herstellung derselben kein hochwertiges Material eingesetzt werden muß. Auch eine Oberflächenbehandlung, wie polieren od.dgl. ist für die Aufnahmeelemente nicht erforderlich.

Es kann weiterhin vorgesehen sein, daß die Holme aus abgelängten Strangpreßprofilen, wie Aluminiumstrangpreßprofilen und die in die Fußhohlräume eingesetzten Aufnahmeelemente aus Druckguß- oder Tiefziehteilen bestehen. Die Aufnahmeelemente sollten jeweils eine, einen Fußabschluß bildende Bodenplatte mit einem eine Bohrung aufweisenden Einsatz aufweisen.

Ein Ausführungsbeispiel der Erfindung wird nachfolgend anhand der Zeichnung näher erläutert. Es zeigen:
- Fig. 1: eine Dachreling in schaubildlicher Ansicht und
- Fig. 2: einen Längsschnitt durch einen Endbereich der Dachreling nach Fig. 1.

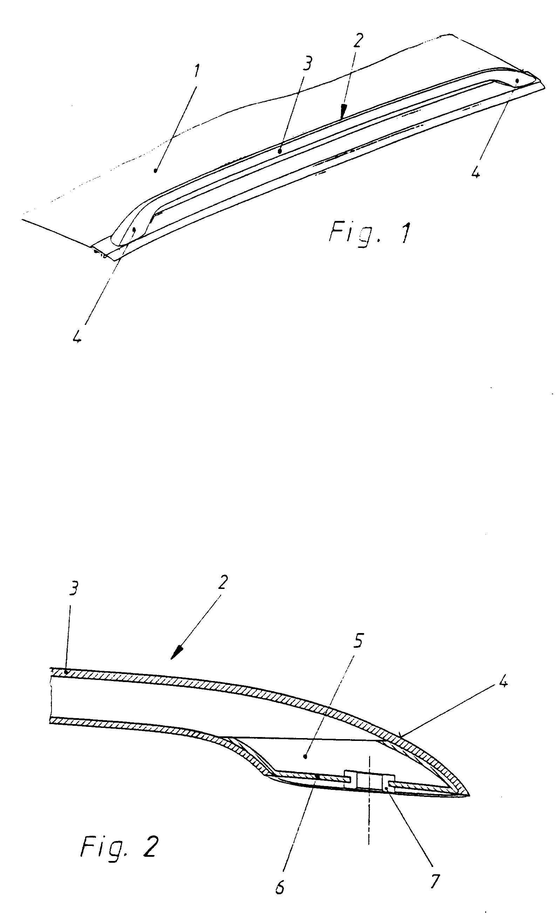

Fig. 1 zeigt eine auf dem Dach 1 eines nicht näher dargestellten Fahrzeugs angeordnete Dachreling 2, die aus einem Holm 3 mit an dessen Enden sitzenden Füßen 4 besteht. Der Holm 3 ist einstückig und übergangslos mit den Füßen 4 ausgebildet und die Füße 4 bestehen aus abgebogenen und aufgeweiteten Endbereichen des Holms 3. Die Dachreling 2 besteht insgesamt aus einem Rohrkörper, so daß sowohl der Holm 3 als auch die Füße 4 hohl sind.

Für das Abbiegen der Holmendbereiche und für das Aufweiten der Holmendbereiche zwecks Bildung der Füße 4, was gegebenenfalls auch einen Beschnitt der Holmendbereiche erforderlich machen kann, sind herkömmliche Vorrichtungen und an sich bekannte Verfahren anzuwenden. So kann z.B. das Aufweiten der Holmendbereiche nach dem Biegen mechanisch mittels eines Dornes erfolgen. Es ist auch ein Aufweiten in einem Werkzeug mit Hilfe eines Druckmediums denkbar.

Jeder der Füße 4 trägt, wie aus Fig. 2 ersichtlich ist, ein im Fußinnern befestigtes Aufnahmeelement 5, das zur Aufnahme von Befestigungsmitteln für die Dachreling bestimmt ist. Das Aufnahmeelement 5 kann den Abmessungen des Fußhohlraums angepaßt und sollte am Fuß 4 zuverlässig befestigt sein. Für die Befestigung kann eine Verklebung, Verstiftung oder Verschraubung vorgesehen sein. Auch ein Umformen der Fußenden ist zur Befestigung des Aufnahmeelements 5 denkbar.

Wie aus Fig. 2 weiterhin ersichtlich ist, weist jedes Aufnahmeelement 5 jeweils eine, einen Fußabschluß bildende Bodenplatte 6 mit einem eine Bohrung aufweisenden Einsatz 7 auf. Die Bohrung im Einsatz 7 kann mit einem Innengewinde für einen zur Befestigung der Dachreling 2 auf einem Fahrzeugdach 1 dienenden Gewindebolzen (nicht gezeigt) versehen sein.

## Patentansprüche

1. Dachreling für Fahrzeuge, bestehend aus zwei, sich in einem Abstand und im wesentlichen parallel zur Dachfläche längs der seitlichen Dachrahmen erstreckenden rohrförmigen Holmen (3) und aus die Holme (3) tragenden, sich jeweils auf dem Dach (1) oder darin ausgebildeten Kanälen abstützenden Füßen (4), die an den Enden der Holme (3) angeordnet sind, dadurch gekennzeichnet, daß die Füße (4) jeweils einstückig mit den Holmen (3) ausgebildet sind und aus abgebogenen und aufgeweiteten Endbereichen der Holme (3) bestehen.

2. Dachreling nach Anspruch 1, dadurch gekennzeichnet, daß jeder Fuß (4) ein im Fußinnern befestigtes Aufnahmeelement (5) trägt, das zur Aufnahme von Befestigungsmitteln für die Dachreling (2) bestimmt ist.

3. Dachreling nach Anspruch 1 und 2, dadurch gekennzeichnet, daß die Holme (3) aus abgelängten Strangpreßprofilen, wie Aluminiumstrangpreßprofilen und die in die Fußhohlräume eingesetzten Aufnahmeelemente (5) aus Druckgußteilen oder Tiefziehteilen bestehen.

4. Dachreling nach wenigstens einem der vorangegangenen Ansprüche, dadurch gekennzeichnet, daß die Aufnahmeelemente (5) jeweils eine, einen Fußabschluß bildende Bodenplatte (6) mit einem eine Bohrung aufweisenden Einsatz (7) aufweisen.

## Claims

1. Roof railing for vehicles, comprising two tubular bars (3), which extend along the lateral roof frames at a distance from and essentially parallel to the roof surface, and feet (4), which bear the bars (3) and are respectively supported on the roof (1) or therein configured channels and are disposed at the ends of the bars (3), characterized in that the feet (4) are configured respectively in one piece with the bars (3) and comprise bent-off and widened end regions of the bars (3).

2. Roof railing according to Claim 1, characterized in that each foot (4) bears a receiving element (5) which is fastened inside the foot and is designed to receive fastening means for the roof railing (2).

3. Roof railing according to Claim 1 and 2, characterized in that the bars (3) consist of cut-to-length extruded profiles, such as aluminium extruded profiles, and the receiving elements (5) inserted into the foot cavities consist of diecast parts or deep-drawn parts.

4. Roof railing according to at least one of the preceding claims, characterized in that the receiving elements (5) respectively exhibit a base plate (6), which forms an extremity for the foot and has an insert (7) exhibiting a bore.

## Revendications

1. Rampes de toit pour véhicules, composées de deux barres (3), s'étendant à distance et sensiblement parallèlement par rapport à la surface du toit le long du cadre de toit latéral et de pieds (4) portant les barres (3), prenant appui chacun sur le toit (1) ou sur les canaux qui y sont réalisés, les pieds étant disposés aux extrémités des barres (3), caractérisées en ce que les pieds (4) sont chacun réalisés d'une seule pièce avec les barres (3) et constitués de zones d'extrémité, coudées et agrandies, des barres (3).

2. Rampes de toit selon la revendication 1, caractérisées en ce que chaque pied (4) porte un élément de support (5) fixé à l'intérieur du pied et conçu pour recevoir des moyens de fixation destinés aux rampes de toit (2).

3. Rampes de toit selon les revendications 1 et 2, caractérisées en ce que les barres (3) sont composées de profilés d'extrusion coupés à longueur, tels que des profilés d'extrusion en aluminium et les éléments de support (5) insérés dans les espaces creux de pied sont composés de pièces moulées sous pression ou de pièces formées par étirage profond.

4. Rampes de toit selon au moins l'une des revendications précédentes, caractérisées en ce que les éléments de support (5) présentent chacun une plaque de fond (6) constituant la délimitation du pied et dotée d'une garniture (7) présentant un perçage.
